# EUROPEAN PATENT SPECIFICATION

(11) **EP 3 684 607 B1**
(45) Date of publication and mention of the grant of the patent: **06.11.2024**
(21) Application number: 18796744.3
(22) Date of filing: 17.09.2018
(51) Int. Cl.: B30B 9/30, B30B 1/00, B65F 1/14

(54) **A STANDALONE WASTE COMPACTION DEVICE**
EIGENSTÄNDIGE ABFALLVERDICHTUNGSVORRICHTUNG
DISPOSITIF AUTONOME DE COMPACTAGE DE DÉCHETS

(30) Priority: 18.09.2017 GB 201715022
(43) Date of publication of application: 29.07.2020
(73) Proprietor: Griffith, Thomas, Balla, County Mayo (IE)
(72) Inventor: Griffith, Thomas, Balla, County Mayo (IE)
(86) International application number: PCT/IB2018/057114
(87) International publication number: WO 2019/053674

(56) References cited:
- EP-A2- 1 638 704
- WO-A1-2008/038317
- WO-A1-2015/135279
- CN-U- 202 499 450
- DE-T5- 112012 002 645
- GB-A- 1 422 196
- US-A1- 2015 122 813
- US-A1- 2016 130 082
- US-A1- 2016 207 272
- US-A1- 2016 272 419

## Description

### Introduction

The present invention relates to a standalone waste compaction device powered primarily by solar energy.

Street bins can quickly fill up to overflowing which is very unsightly in addition to being a health hazard. Solar street bins are known. European Patent Application o. EP 1638704 (Big Belly Solar) describes a bin fitted with a solar-powered waste compactor which crushes rubbish to increase the capacity of the bin by six to eight times that of a traditional litter bin. Sensors in the bin detect when it's full and send a message to council staff letting them know the bin needs to be emptied. Specialized equipment is required to collect the rubbish from the bin. The document US 2016/272419 A1 discloses a standalone waste compacting device comprising: an enclosure comprising a removable bin ;a cover section on the enclosure incorporating at least one solar power unit; at least one storage battery and control unit; at least one inwardly pivoting user access flap comprising a dual locking control mechanism comprising a mechanical lock system ;at least one recessed foot pedal mechanism (208) for opening the access flap.

There is a need for an improved standalone waste compaction device.

### Statements of Invention

According to the invention there is provided a standalone waste compacting device in accordance with claim 1.

In one embodiment of the invention the solar power unit comprises a polycarbonate cover with a photovoltaic unit mounted beneath it the photovoltaic unit connected to the storage battery.

In one embodiment of the invention the device comprises at least one alternative source of energy to supplement the energy stored in the batteries. Preferably the energy is mechanical energy generated by operation of the foot pedal mechanism. Preferably the energy is mechanical energy generated by operation of a compaction assist spring during a compaction cycle.

In accordance with the invention the dual locking system on the access flap comprises an electronic lock system and a mechanical lock system. Preferably the electronic lock system is activated prior to compaction and the mechanical lock system activates once compaction commences.

In one embodiment of the invention the pivoting access flap comprises a substantially L-shaped planar unit which pivots inwardly on a flap pivot. Preferably the mechanical lock comprises a lock pivot and lock head which presses down when activated on the short upper end of the L-shaped flap.

In one embodiment of the invention the inwardly pivoting user access flap is operated by hand or by operation of the foot pedal. Preferably the opening of the access flap by hand and by operation of the foot pedal are independent of one another.

In one embodiment of the invention the pivoting access flap is controlled by a damper assembly. Preferably the damper assembly comprises a gas strut directly connected to the foot pedal and connected by a link arm to the lock head on the access flap.

In one embodiment of the invention the foot pedal is connected to a generator.

In accordance with the invention the compaction unit comprises extendable sideguards which extend when the scissor linkage extends to fully enclose the compaction unit.

In another embodiment of the invention the control unit comprises a general controller, a solar controller, an ultrasonic sensor unit, and an "intelligent fuel gauge". Preferably the ultrasonic sensor unit determines when maximum capacity has been reached in the removable bin.

In one embodiment of the invention the compaction pressure is regulated by the controller.

In one embodiment of the invention the device comprises at least one sensor. Preferably
the device comprises a sensor actuator located directly on the access flap to alert the controller when the flap is damaged or vandalised.

In one embodiment of the invention the controller comprises a bin locking system when the removable bin has reached maximum capacity. Preferably the bin locking system locks the access flap closed.

In one embodiment of the invention the controller comprises a sensor to detect bombs and/or dangerous chemicals and signal the controller to lock down the compacting device.

In one embodiment of the invention the controller communicates information remotely from the sensors on the capacity status, diagnostics or any other issues to a control centre.

In another embodiment of the invention the controller receives information remotely from a control centre to lock down and prevent access to the bin.

In one embodiment of the invention the device comprises a recessed cigarette bin.

In another embodiment of the invention the device comprises an integrated fire extinguisher system.

### Brief Description of the Drawings

The invention will be more clearly understood from the following description thereof with reference to the accompanying drawings in which:

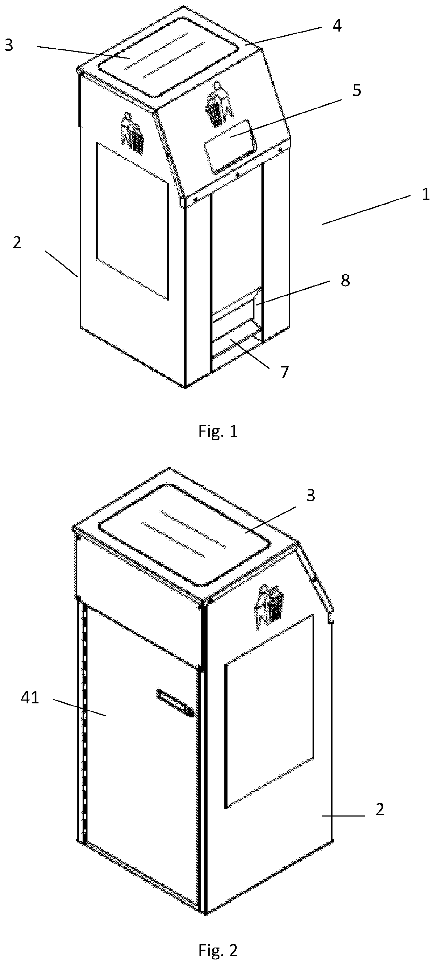

Fig. 1 is a perspective view of the bin according to the invention;
Fig. 2 is a perspective view from the rear of the bin of Fig. 1;
Figs. 3 (a) to (f) are perspective views of the bin according to different embodiments of the invention;
Figs. 4 (a) and (b) are perspective views of the bin according to another embodiment of the invention;
Fig. 5 is a partial cross sectional view of the inside of the bin according to the invention;
Fig. 6 is a side view of the compaction unit of the bin according to the invention;
Fig. 7 is an exploded view of the dual locking mechanism operating the access flap on the bin according to the invention;
Fig. 8 is a side view of a foot pedal mechanism to operate the access flap of the bin according to the invention;
Fig. 9 is a side view of a foot pedal mechanism according to another embodiment of the invention;
Fig. 10 is an exploded view of the foot pedal mechanism of Fig. 9; and
Fig. 11 is a further view of the foot pedal mechanism of Fig. 9.

### Detailed description

One problem with known waste bin compactors is that they require specialised equipment to collect the rubbish. Manual handling & lifting of rubbish bins is labour intensive and has lots of associated risks in the type of rubbish that can be handled.

Another problem with solar powered waste bin compactors is that the bins do not always receive sufficient solar energy to maintain the compacting action. This frequently results in overfilled and overflowing bins.

The standalone waste compactor of the present invention uses standard commercial wheeled waste bins as the removable bin and compactor receptacle. Standard commercial waste bins allow existing bin lorries fitted with bin lifting equipment to pick up and dispose of the waste without further cost or training to the waste company.

Using standard commercial waste bins also removes any issues of manual handling and other lifting hazards. There is no need for a bin collecting operator to lift the bins thereby eliminating any related health risks. The bin collecting operator is also
isolated from the danger of syringes and other sharp objects protruding through plastic bag containers and posing a health risk to the operator. The operator is isolated from unhygienic risks such as potential contact with Bio Hazards Objects - e.g. faeces, vomit and used condoms from split bags or containers when lifting into a removal truck. In addition as commercial bins are typically larger, more material can be compacted before the bin needs to be collected.

To protect users and the general public from the working parts of the bin and also to protect the unit against vandalism, the collecting bin, compactor & all working parts are enclosed within an enclosure or chamber. This chamber may be designed to be blast proof against terrorist threats.

The standalone waste compactor device of the present invention does not have access to a utility supplied power source and is primarily solar powered. The solar energy is stored in internal batteries. The size of both the internal batteries and the solar panels are limited by the available space and cost. When access to available solar power is constrained by the duration of day light periods, weather conditions or for other reasons the device has alternative sources of energy such as energy generated by mechanical means to supplement charging up the storage batteries.

The solar bin 1 of the present invention comprises an enclosure 2 with a polycarbonate top 3 allowing sun to penetrate through to a photovoltaic (PV) solar panel 4 mounted beneath it. The photovoltaic panel is positioned for exposure to the sun and power produced by the photovoltaic panel is stored in a storage battery in the unit. The solar bin 1 has at least one solar panel depending on the available suitable space.

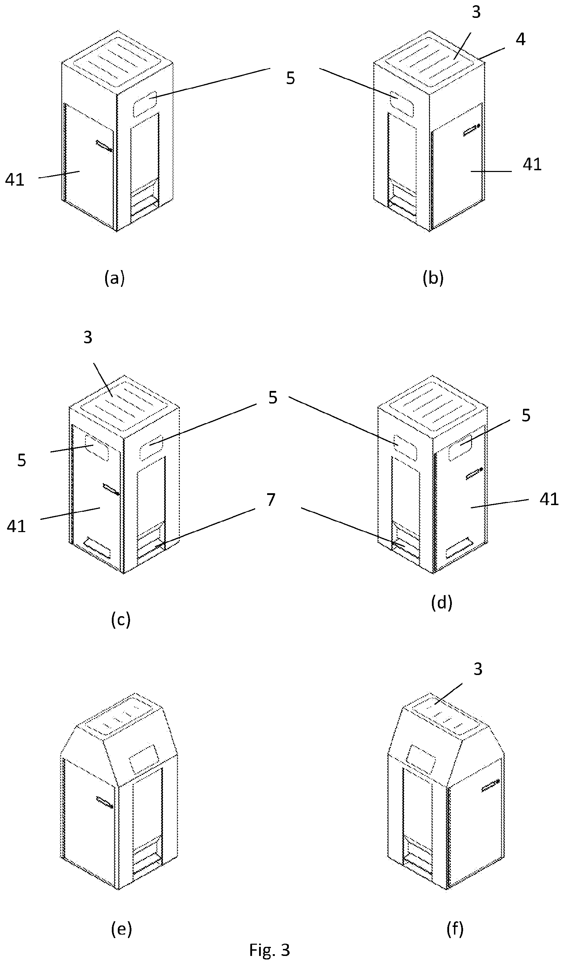

The front of the unit comprises one inwardly pivoting access flap 5 which allows users to put rubbish into the wheeled bin container 6 within the enclosure 2. As shown in Figs. 3 (a) to (f) the unit may have more than one access flap 5 so that user access to the bin is not compromised no matter where the bin is located or positioned. The unit may have a user access flap 5 on every side.

A foot pedal 7 is located in a recess 8 on the lower end of the enclosure 2. The foot pedal 7 allows a user to open the access flap 5 and insert rubbish without their hands coming into contact with the bin. The recess 8 is designed to ensure that the user only approaches the pedal from the front protecting the user's feet from striking the pedal from the side or on the edge of the pedal. The recessed foot pedal 7 also avoids any risk to passer's of tripping or knocking into the pedal as is the case with protruding pedals. As shown in Fig. 3 (c) and (d) the unit may have more than one foot pedal 7 located on different sides of the unit so that a user can open the access flap 5 on the bin no matter where the bin is located or positioned.

The inwardly pivoting access flap 5 allows users to put items into the wheeled bin container 6. The flap is a substantially planar L-shaped unit with the long arm 5a of the L-shape covering the access area and the short arm 5b extending into the enclosure 2. The planar L-shaped flap 5 pivots on a flap pivot 40.

The access flap 5 may be push operated by hand or by foot pedal operation at the discretion of the user. The foot pedal 7 gives a choice of operation as some users do not like touching bins. The foot pedal 7 operation allows the access flap 5 to be pushed open independently of the pedal 7. This prevents a crushing effect if a small foot is placed under the pedal 7 while pushing the access flap 5 open by hand.

The access flap 5 may be pushed open freely by hand. However the closing of the access flap 5 is carried out at a controlled pace using a using damper assembly. The damper assembly prevents any injury occurring if a hand is placed into the chute area 10 when the access flap 5 is no longer supported open. The damper assembly comprises a gas strut 11 directly connected to a sub-plate 12 on the foot pedal 7 and in turn connected to the access flap 5 by a link arm 13. The gas strut 11 is positioned to actuate on the foot pedal 7 and the access flap 5 returning both to a ready operational state in a single action. The pedal sub-plate 12 allows the pedal 7 to sit freely while mounted on the same pivot axis. Other suitable damper means such as a spring may be used to reduce the closing speed of the flap to prevent injury.

The use of an inwardly pivoting flap access 5 to the bin container 6 prevents odours from escaping from the bin and in addition prevents vermin from accessing the waste. The access flap 5 incorporates a safety feature to ensure that the access flap 5 is locked in a closed position during the compaction cycle to prevent persons from accessing the bin during the compaction process.

The access flap 5 locking system incorporates a two-part locking device, an electronic powered lock and a mechanical lock. Prior to compacting the controller actuates the electronic lock preventing users from operating the flap and once compaction commences the mechanical locking occurs.

The compactor head 22 moves on a vertical emphasis 23 from the head of the mechanical lock 21 which is held in tension by a spring 24, and moves into position ensuring that the flap 5 remains closed. The mechanical lock 21 comprises a lock pivot 25 and lock head 25a which presses down when activated on the short end 5b of the L-shaped flap 5b.

The contact angle from the lock 21 to the striking face 27 of the flap 5 is optimised to be as perpendicular as practicable so as to contain the flap when the flap 5 is struck at force.

During a compaction cycle the access flap 5 is locked with an electrically controlled actuator 20. As the compaction cycle commences, the mechanical lock moves into position as a second safety device and also as an energy saving device to reduce the power draw used by the primary lock, the electrically controlled actuator 20.

A sensor actuator 26 is located directly on the long end 5a of the flap 5 to alert the controller should the flap be damaged or vandalised that the compaction process cannot occur.

The compactor unit 30 is removable as a separate entity from the enclosure 2 for servicing. The compactor unit 30 incorporates a scissor linkage 31 and a lever linkage system 32.

The compactor unit 30 is removable as a separate entity from the enclosure 2 for servicing. The compactor unit 30 comprises a linear actuator 18, actuator mounting 19, and lever arm 17, connected to a scissor linkage 34 which in turn is connected to the compactor plate or head 22. Shrouding the linkage assembly 34 are the scissor linkage extendable sideguards 35 which prevents debris from entering into the scissor linkage assembly 34 and also acts as a second guard preventing persons from putting their hands into the scissor linkage 34, as it compacts and retracts, should there be a failure of the main safety devices or locks.

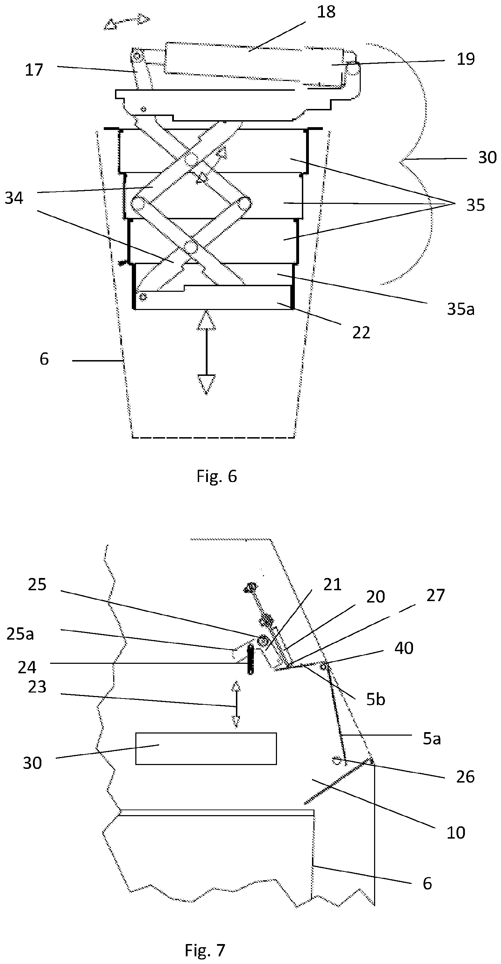

In operation the actuator 18 pushes the lever arm 17 though an arc giving optimum force through the lever as the angle of the actuation works through the perpendicular as shown in Fig 6. The lever arm 17 forces the scissor linkage 34 to expand to its maximum allowable extension lowering the compactor plate 22 into the bin 6. Each set of extendable guards 35 drops as the compactor plate 22 lowers. To retract the compactor plate 22, the linear actuator 18 pulls in reverse working the scissor linkage 34 and lifting the compactor unit 30 back into its folded resting position. The lower guard 35a catches each set of extendable guards on the return stroke, pulling them up into retracted position.

The compacting unit 30 in its folded resting position utilises minimal space in the bin overall.

The linkage system of the present invention also reduces the amount of torque required to close the compactor unit in the final stages, thereby reducing the power requirement on the unit.

The compaction pressure is regulated by controlling the electrical current to the actuator. This is monitored by the controller and it will retract the compactor upon reaching the current limit on an outward stroke. This control limits the amount of compaction in the bin and acts as a safety device as not to damage the bin container.

A bomb detection and/or chemical sensor may be located on the compactor head. Such sensors would become energised during the compaction process to sense for bombs or improvised explosive devices. The sensor would create a signal to be sent via the controller to raise an alarm. Alternatively the sensors may be located at the chute entrance to the bin and would be activated upon flap opening with an energy saving controller to have the unit switched on for a period of time to allow material to be checked when placed into the bin after the flap has been opened. A signal may be sent remotely to the controller to cause the compactor head to be lowered locking the access flap closed in the event of a bomb threat. Citywide all bins may be locked down in this way preventing access to the enclosure of the bin.

The odour of the compacted material may be reduced by a spray that occurs after each compaction cycle. A mechanical actuation of the spray occurs on the return of the compactor. In addition to preventing odours, an anti-vermin spray or insect spray may also be added to the cycle.

Service access is through a large door 41 located on the rear of the enclosure 1. Alternatively service access may be located on either side of the enclosure 2. This ensures easy access to the removable bin no matter what the position of the standalone unit. A sensor actuator is located on the door, preventing a compaction cycle from commencing if the door 6 is open. The door is key locked closed preventing general public from accessing the bin.

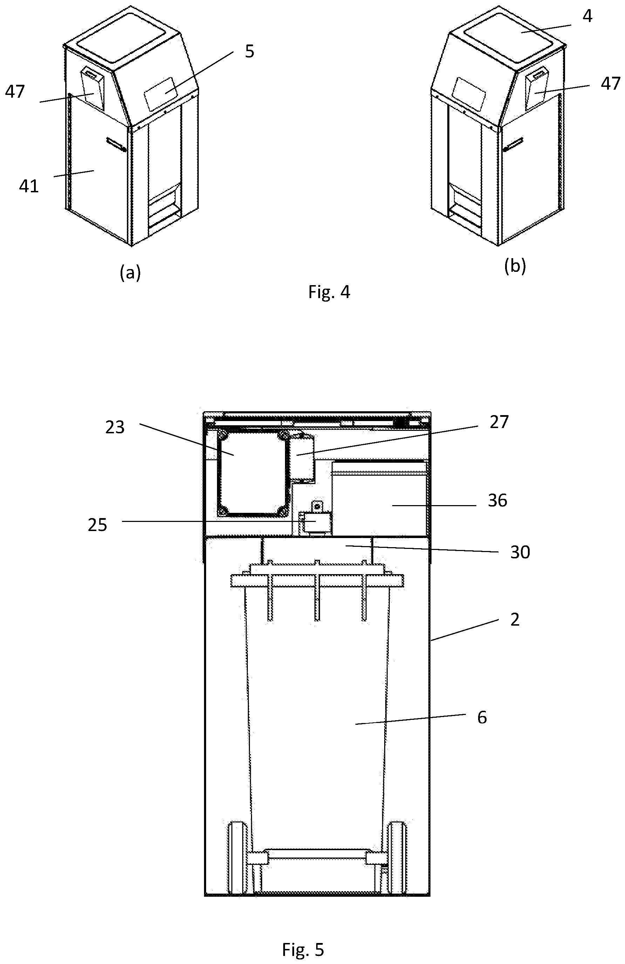

As shown in Fig. 5 the service shelf 33 within the device 1 comprises a controller 23, solar controller 27, ultrasonic sensor unit 25 and a battery 26.

Fitted separately but preferably recessed into the main enclosure is a cigarette bin 47. Being separate from the main body of the unit reduces the chance of fire entering the main bin and being recessed into the outer enclosure of the device 1 reduces the opportunity for vandalism.

Further fire precautions may include a fitted automatic fire extinguisher system incorporated by any suitable means into the design of the machine.

The controller comprises a system of "rubbish level measuring" preventing the removable bin from being over filled and preventing the general public from accessing the bin. The ultrasonic sensor unit 25 measures the height of waste in the bin. The sensor signals the controller which then prevents the access flap from being opened when a certain height of compacted rubbish has been reached This system may be disabled if required.

There are a range of bin measuring devices and administration software commercially available for routing traffic to optimise fuel economy to the appropriate full bin. The ultrasonic sensor may be connected via software and communicate through GSM, Sigfox and LoRa or other IOT methods to a central data system to notify the waste company responsible for the bin when the bin needs to be emptied.

A bin "Lock Out" system is also incorporated. This prevents overfilling of the bin and the chute area, reducing servicing time and reducing health and safety hazards for the waste operator in not having to pull waste material from the chute. The lock out system is connected to the controller which connects to a data centre to notify that the bin requires urgent emptying. The controller may also be accessed remotely whereby at the touch of a button all bins in a given area may be locked down. The compactor head is lowered which engages the mechanical lock and the access flap is locked.

The standalone waste compacting device of the present invention may be accessed remotely for diagnostics, battery monitoring or any malfunction issues.

The standalone waste compacting device of the present invention incorporates an efficient management of energy to improve the effectiveness of the unit.

The compaction unit of the present invention has incorporated a number of ways to minimise all non-essential energy usage. The continuous energy drain on the system is measured and documented and may be used to create a base energy budget or quiescent energy requirement for each bin.

The call for compaction is intelligent and responsive to demand and based on the base quiescent energy, ie compaction of the waste material in the bin only occurs when it is necessary to compact.

To minimise energy usage the distance (level) measurement action only occurs if materials are added to the bin. A distance measuring device, such as an ultrasonic device or the like, may be used to establish the level of waste materials in the bin. If the level of waste materials is above a defined limit a compaction cycle is initiated.

Alternatively or additionally the number of operations of the "access flap" may be used as indicative of materials added and the distance measuring sensor may activate when the flap is operated a defined number of times.

The actuator on the compactor may be fitted with an extension distance transducer. This is used to estimate the compacted materials level.

The compaction unit of the present invention optimises the compaction efficiency by pausing the actuator at maximum extension to ensure that materials are fully compacted. In this way any trapped air is allowed escape maximising compaction. A spring or similar mechanism is used to ensure the compacting force is applied when the compacting actuator is paused.

The compaction unit of the present invention may comprise an intelligent battery "fuel gauge". Only in response to certain criteria does compaction occur. For example compaction will operate only on material level in the lower quarter of the bin, compaction does not occur in the lower 1% of the bin and any changes in charge level is reported remotely or locally by the system.

In the event of the battery level falling below a predefined level, a message is issued to the remote system manager entity. Several actions may be taken in response such as emptying and/or replacing the bin, charging the system battery or replacing the battery with a fully charged unit. An external power source may also be fitted to the machine to charge the battery if required.

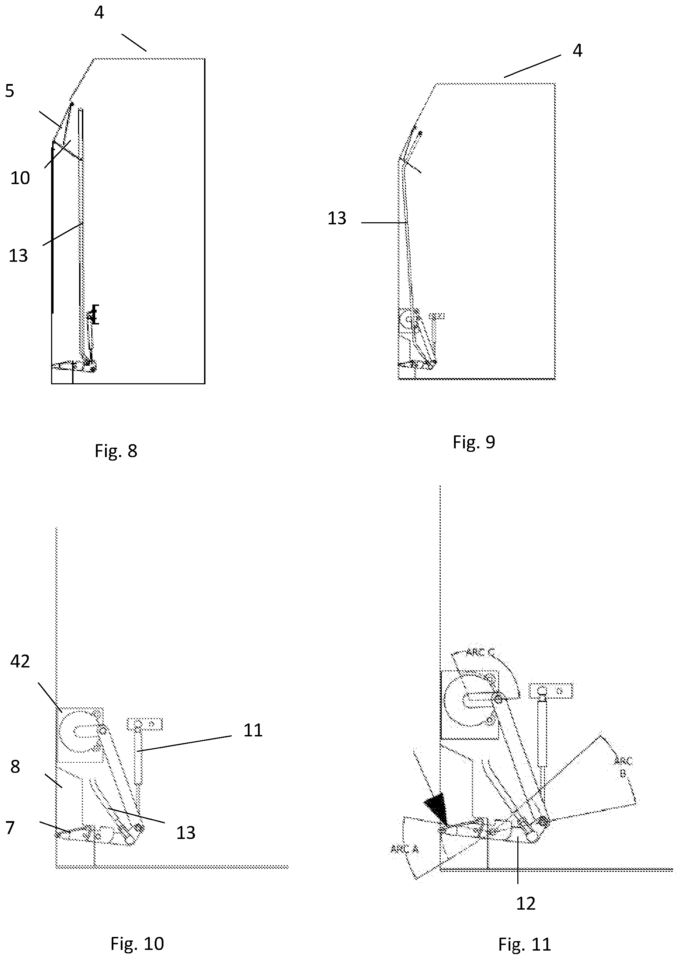

In addition to solar power the unit comprises alternative means of energy to supplement charging up the storage batteries. The foot pedal mechanism may be used to generate energy. As shown in Figs. 9 to 11 the pedal actuation & flap actuation are connected through the pedal sub plate 12. Depression of the pedal 7 will transmit energy through the connecting rod 13 to the generator 42. The gas strut or damper 11 ensures the return stroke of the pedal actuation. Where there is more than one foot pedal each pedal may have an individual generator or the pedals may share a generator or generators.

A compacting assist spring may also be attached to the scissor linkage to help with the compacting and produce energy while doing so to supplement the stored energy in the storage battery.

The completely enclosed unit of the waste compactor bin of the present invention means that odours are reduced thereby limiting access to vermin and other animals.

The enclosure surround is large enough to facilitate advertising and where possible screens may be fitted to offer information.

The invention is not limited to the embodiment hereinbefore described, with reference to the accompanying drawings, which may be varied within the scope of the appended claims.

## Claims

1. A standalone waste compacting device comprising:
an enclosure (2) comprising a removable bin (6);
a cover section (3) on the enclosure incorporating at least one solar power unit (4);
at least one storage battery and control unit (23,27);
at least one inwardly pivoting user access flap (5) comprising a dual locking control
mechanism comprising an electronic lock system (20) and a mechanical lock system:
at least one recessed foot pedal mechanism (7) for opening the access flap (5);
a detachable independent compaction unit (30) comprising a scissor linkage (34) and
lever linkage system, the compaction unit comprising extendable sideguards (35) which extend when the scissor linkage extends to fully enclose the compaction unit; and
at least one service access means.

2. A device as claimed in claim 1 wherein the solar power unit comprises a polycarbonate cover with a photovoltaic unit mounted beneath it the photovoltaic unit connected to the storage battery.

3. A device as claimed in claim 1 and 2 comprising at least one alternative source of energy to supplement the energy stored in the batteries.

4. A device as claimed in claim 3 wherein the energy is mechanical energy generated by operation of the foot pedal mechanism and/or mechanical energy generated by operation of a compaction assist spring during a compaction cycle.

5. A device as claimed in any preceding claim wherein the electronic lock system is activated prior to compaction and the mechanical lock system activates once compaction commences.

6. A device as claimed in any preceding claim wherein the pivoting access flap comprises a substantially L-shaped planar unit which pivots inwardly on a flap pivot, wherein the mechanical lock comprises a lock pivot and lock head which presses down when activated on the short upper end of the L-shaped flap.

7. A device as claimed in any preceding claim wherein the inwardly pivoting user access flap is operated by hand or by operation of the foot pedal wherein the opening of the access flap by hand and by operation of the foot pedal are independent of one another.

8. A device as claimed in claim 7 wherein closing of the pivoting access flap is controlled by a damper assembly wherein the damper assembly comprises a gas strut directly connected to the foot pedal and connected by a link arm to the lock head on the access flap.

9. A device as claimed in any preceding claim wherein the foot pedal is connected to a generator.

10. A device as claimed in any preceding claim wherein the control unit comprises a general controller, a solar controller, an ultrasonic sensor unit, and an "intelligent fuel gauge" and wherein the compaction pressure is regulated by the controller.

11. A device as claimed in any preceding claim comprising at least one sensor, a sensor actuator located directly on the access flap to alert the controller when the flap is damaged or vandalised, a sensor to determine when maximum capacity has been reached in the removable bin, a sensor to detect bombs and/or dangerous chemicals and signal the controller to lock down the compacting device, wherein the controller communicates information remotely from the sensors on the capacity status, diagnostics or any other issues to a control centre.

12. A device as claimed in any preceding claim wherein the controller comprises a bin locking system when the removable bin has reached maximum capacity wherein the bin locking system locks the access flap closed.

13. A device as claimed in any preceding claim wherein the controller receives information remotely from a control centre to lock down and prevent access to the bin.

14. A device as claimed in any preceding claim comprising a recessed cigarette bin and/or an integrated fire extinguisher system.

## Patentansprüche

1. Eigenständige Abfallverdichtungsvorrichtung, umfassend:
ein Gehäuse (2), umfassend einen herausnehmbaren Behälter (6);
einen Abdeckabschnitt (3) auf dem Gehäuse, in das mindestens eine Solarstromeinheit (4) integriert ist;
mindestens eine Speicherbatterie und eine Steuereinheit (23, 27);
mindestens eine nach innen schwenkende Benutzerzugangsklappe (5), umfassend einen doppelten Verriegelungssteuermechanismus, umfassend ein elektronisches Verriegelungssystem (20) und ein mechanisches Verriegelungssystem:
mindestens eine ausgesparten Fußpedalmechanismus (7) zum Öffnen der Zugangsklappe (5);
eine abnehmbare unabhängige Verdichtungseinheit (30), umfassend ein Scherengestänge (34) und ein Hebelgestängesystem, die Verdichtungseinheit umfassend ausfahrbare Seitenschutzvorrichtungen (35), die ausgefahren werden, wenn das Scherengestänge ausgefahren wird, um die Verdichtungseinheit vollständig zu umschließen; und mindestens eine Wartungszugangseinrichtung.

2. Vorrichtung nach Anspruch 1, wobei die Solarstromeinheit eine Polycarbonatabdeckung mit einer darunter montierten photovoltaischen Einheit umfasst, die mit der Speicherbatterie verbunden ist.

3. Vorrichtung nach Anspruch 1 und 2, umfassend mindestens eine alternative Energiequelle zur Ergänzung der in den Batterien gespeicherten Energie.

4. Vorrichtung nach Anspruch 3, wobei die Energie mechanische Energie ist, die durch Betätigung des Fußpedalmechanismus und/oder mechanische Energie ist, die durch Betätigung einer Verdichtungshilfsfeder während eines Verdichtungszyklus erzeugt wird.

5. Vorrichtung nach einem der vorherigen Ansprüche, wobei das elektronische Verriegelungssystem vor einer Verdichtung aktiviert wird und das mechanische Verriegelungssystem aktiviert wird, sobald eine Verdichtung beginnt.

6. Vorrichtung nach einem der vorherigen Ansprüche, wobei die schwenkende Zugangsklappe eine im Wesentlichen L-förmige ebene Einheit umfasst, die auf einem Klappenzapfen nach innen schwenkt, wobei die mechanische Verriegelung einen Verriegelungszapfen und einen Verriegelungskopf umfasst, der bei Aktivierung auf das kurze obere Ende der L-förmigen Klappe nach unten drückt.

7. Vorrichtung nach einem der vorherigen Ansprüche, wobei die nach innen schwenkende Benutzerzugangsklappe von Hand oder durch Betätigung des Fußpedals betätigt wird, wobei das Öffnen der Zugangsklappe von Hand und die Betätigung des Fußpedals voneinander unabhängig sind.

8. Vorrichtung nach Anspruch 7, wobei ein Schließen der schwenkenden Zugangsklappe durch eine Dämpferanordnung gesteuert wird, wobei die Dämpferanordnung eine Gasdruckfeder umfasst, die direkt mit dem Fußpedal verbunden ist und über einen Verbindungsarm mit dem Verriegelungskopf an der Zugangsklappe verbunden ist.

9. Vorrichtung nach einem der vorherigen Ansprüche, wobei das Fußpedal mit einem Generator verbunden ist.

10. Vorrichtung nach einem der vorherigen Ansprüche, wobei die Steuereinheit eine allgemeine Steuerung, eine Solarsteuerung, eine Ultraschallsensoreinheit und eine "intelligente Kraftstoffanzeige" umfasst, und wobei der Verdichtungsdruck durch die Steuerung reguliert wird.

11. Vorrichtung nach einem der vorherigen Ansprüche, umfassend mindestens einen Sensor, einen Sensoraktuator, der sich direkt an der Zugangsklappe befindet, um die Steuerung zu alarmieren, wenn die Klappe beschädigt oder vandalisiert ist, einen Sensor, um zu bestimmen, wann die maximale Kapazität in dem herausnehmbaren Behälter erreicht ist, einen Sensor, um Bomben und/oder gefährliche Chemikalien zu erkennen und der Steuerung zu signalisieren, die Verdichtungsvorrichtung zu verriegeln, wobei die Steuerung Informationen von den Sensoren über den Kapazitätsstatus, Diagnosen oder andere Probleme ferngesteuert an ein Kontrollzentrum übermittelt.

12. Vorrichtung nach einem der vorherigen Ansprüche, wobei die Steuerung ein Behälterverriegelungssystem umfasst, wenn der herausnehmbare Behälter seine maximale Kapazität erreicht hat, wobei das Behälterverriegelungssystem die Zugangsklappe verriegelt.

13. Vorrichtung nach einem der vorherigen Ansprüche, wobei die Steuerung Informationen von einem Kontrollzentrum aus der Ferne empfängt, um den Behälter zu verriegeln und den Zugang dazu zu verhindern.

14. Vorrichtung nach einem der vorherigen Ansprüche, umfassend einen ausgesparten Zigarettenbehälter und/oder ein integriertes Brandlöschsystem.

## Revendications

1. Un dispositif autonome de compactage de déchets comprenant :
une enceinte (2) comprenant un bac amovible (6) ;
une section de couverture (3) sur l'enceinte incorporant au moins une unité d'énergie solaire (4) ;
au moins un accumulateur et une unité de commande (23,27) ;
au moins un volet d'accès utilisateur (5) pivotant vers l'intérieur comprenant un mécanisme de contrôle à double verrouillage comprenant un système de verrouillage électronique (20) et un système de verrouillage mécanique :
au moins un mécanisme de pédale encastré (7) pour ouvrir le volet d'accès (5) ;
une unité de compactage indépendante et amovible (30) comprenant une articulation en ciseaux (34) et un système de tringlerie de levier, l'unité de compactage comprenant des protections latérales extensibles (35) qui s'étendent lorsque l'articulation en ciseaux se déploie afin d'entourer complètement l'unité de compactage ; et
au moins un moyen d'accès au service.

2. Un dispositif selon la revendication 1, dans lequel l'unité d'énergie solaire comprend un couvercle en polycarbonate sous lequel est montée une unité photovoltaïque, l'unité photovoltaïque étant connectée à l'accumulateur.

3. Un dispositif selon les revendications 1 et 2, comprenant au moins une source d'énergie alternative pour compléter l'énergie stockée dans les batteries.

4. Un dispositif selon la revendication 3, dans lequel l'énergie est une énergie mécanique générée par le fonctionnement du mécanisme de la pédale et/ou une énergie mécanique générée par le fonctionnement d'un ressort d'assistance au compactage au cours d'un cycle de compactage.

5. Un dispositif selon l'une quelconque des revendications précédentes, dans lequel le système de verrouillage électronique est activé avant le compactage et le système de verrouillage mécanique est activé une fois que le compactage commence.

6. Un dispositif selon l'une quelconque des revendications précédentes, dans lequel le volet d'accès pivotant comprend une unité plane sensiblement en forme de L qui pivote vers l'intérieur sur un pivot de volet, dans lequel le verrou mécanique comprend un pivot de verrouillage et une tête de verrouillage qui, lorsqu'elle est activée, exerce une pression sur l'extrémité supérieure courte du volet en forme de L.

7. Un dispositif selon l'une quelconque des revendications précédentes, dans lequel le volet d'accès utilisateur pivotant vers l'intérieur est actionné à la main ou par la pédale, dans lequel l'ouverture du volet d'accès à la main et par la pédale sont indépendantes l'une de l'autre.

8. Un dispositif selon la revendication 7, dans lequel la fermeture du volet d'accès pivotant est contrôlée par un ensemble amortisseur, dans lequel l'ensemble amortisseur comprend un vérin à gaz directement relié à la pédale et connecté par un bras de liaison à la tête de verrouillage sur le volet d'accès.

9. Un dispositif selon l'une quelconque des revendications précédentes, dans lequel la pédale est reliée à un générateur.

10. Un dispositif selon l'une quelconque des revendications précédentes, dans lequel l'unité de commande comprend un contrôleur général, un contrôleur solaire, une unité de capteur à ultrasons et une "jauge de carburant intelligente", et dans lequel la pression de compactage est régulée par le contrôleur.

11. Un dispositif selon l'une quelconque des revendications précédentes, comprenant au moins un capteur, un actionneur de capteur situé directement sur la trappe d'accès pour alerter le contrôleur lorsque la trappe est endommagée ou vandalisée, un capteur pour déterminer lorsque la capacité maximale a été atteinte dans le bac amovible, un capteur pour détecter des bombes et/ou des produits chimiques dangereux et signaler au contrôleur de verrouiller le dispositif de compactage, dans lequel le contrôleur communique à distance à un centre de contrôle des informations provenant des capteurs sur l'état de la capacité, les diagnostics ou tout autre problème.

12. Un dispositif selon l'une quelconque des revendications précédentes, dans lequel le contrôleur comprend un système de verrouillage du bac lorsque le bac amovible a atteint sa capacité maximale, dans lequel le système de verrouillage du bac bloque la trappe d'accès en position fermée.

13. Un dispositif selon l'une quelconque des revendications précédentes, dans lequel le contrôleur reçoit des informations à distance d'un centre de contrôle afin de verrouiller et d'empêcher l'accès au bac.

14. Un dispositif selon l'une quelconque des revendications précédentes, comprenant une boîte à mégots encastrée et/ou un système d'extincteur intégré.
